# EUROPÄISCHE PATENTSCHRIFT

(11) **EP 3 603 788 B1**
(45) Veröffentlichungstag und Bekanntmachung des Hinweises auf die Patenterteilung: **14.04.2021**
(21) Anmeldenummer: 19188252.1
(22) Anmeldetag: 25.07.2019
(51) Int. Cl.: B01J 3/00, B01J 3/03, B01J 3/04, G01J 5/02

(54) **DRUCKBEHÄLTER MIT HOCHDRUCKFENSTER**
PRESSURE VESSEL WITH A HIGH PRESSURE WINDOW
RÉSERVOIR SOUS PRESSION POURVU DE FENÊTRE HAUTE PRESSION

(30) Priorität: 02.08.2018 DE 202018104455 U
(43) Veröffentlichungstag der Anmeldung: 05.02.2020
(73) Patentinhaber: MLS Mikrowellen-Labor-Systeme GmbH, 88299 Leutkirch (DE)
(72) Erfinder: Lautenschläger, Werner, 9435 Heerbrugg (CH); Lautenschläger, Jens, 9435 Heerbrugg (CH); Scholze, Werner, 88316 Isny (DE)
(74) Vertreter: Kiwit, Benedikt

(56) Entgegenhaltungen:
- EP-A2- 2 638 965
- CN-A- 102 004 000
- GB-A- 2 542 813
- JP-A- H05 285 363
- US-A- 3 886 364
- US-A1- 2012 307 862

## Beschreibung

Die Erfindung betrifft einen Druckbehälter mit einer Druckbehälterwand, welche eine Reaktionskammer als Druckraum zum Auslösen und/oder Fördern chemischer und/oder physikalischer Druckreaktionen einer in der Reaktionskammer aufgenommenen, zu beheizenden Proben vollständig umgibt.

Druckbehälter der eingangs genannten Arten sind grundsätzlich aus dem Stand der Technik bekannt. Zur Temperaturmessung wird in der Regel ein Infrarot-Temperatursensor benutzt, der wegen des hohen Drucks in der Reaktionskammer außerhalb des Druckbehälters angeordnet ist. Damit die von den beheizten Proben in der Reaktionskammer emittierte Infrarotstrahlung während einer Druckreaktionen gut zum Infrarotsensor zur Temperaturmessung geleitet wird, ist es aus dem Stand der Technik bekannt, ein Lichtleitrohr zu verwenden, welches sich von dem außerhalb des Druckbehälters vorgesehenen Infrarotsensor bis in die Nähe der Reaktionskammer erstreckt. Da also der Infrarot-Temperatursensor verhältnismäßig weit von der Reaktionskammer entfernt ist, nämlich außerhalb des Druckbehälters, ergibt sich ein verhältnismäßig großer, insbesondere hoch bauender Druckbehälter In EP-A-2 638 965 wird ein Druckbehälter für die chemische Synthese offenbart.

Es ist somit eine Aufgabe der Erfindung, die oben genannten Nachteile des Standes der Technik zu überwinden, d. h. insbesondere einen Druckbehälter mit einer verbesserten Temperaturmessung bereitzustellen, welcher zudem kompakter ist.

Die Aufgabe wird erfindungsgemäß für den Druckbehälter durch die Merkmale des unabhängigen Anspruchs gelöst. Vorteilhafte Weiterbildungen sind Gegenstand der hierauf rückbezogenen Unteransprüche.

Ein erfindungsgemäßer Druckbehälter weist eine Druckbehälterwand auf, welche eine Reaktionskammer als Druckraum zum Auslösen und/oder Fördern chemischer und/oder physikalischer Druckreaktionen einer in der Reaktionskammer aufgenommenen, zu beheizenden Proben vollständig umgibt. Die Druckbehälterwand weist ein infrarotdurchlässiges Hochdruck(-Infrarot)fenster auf, welches sich in einer Richtung (oder ausgehend) von der Reaktionskammer nach außen weg erstreckt und sich bezüglich eines Drucks in der Reaktionskammer in der Druckbehälterwand abstützt. Der Druckbehälter weist ferner einen Infrarot-Temperatursensor auf, welcher bezüglich der Reaktionskammer (von außen) direkt dem Hochdruckfenster gegenüberliegt, um die Temperatur einer in der Reaktionskammer aufgenommenen Probe während einer Druckreaktionen durch das Hochdruckfenster hindurch zu messen.

Mit anderen Worten bewirkt das Hochdruckfenster, dass die Kraft, welche durch den Druck in der Reaktionskammer bedingt ist und in Richtung des Infrarot-Temperatursensor wirkt, über das Hochdruckfenster auf die Druckbehälterwand umgeleitet wird. Somit ist der Bereich, welcher sich von außerhalb des Druckbehälters bis hin zum Hochdruckfenster erstreckt, ein von dem Druck in der Reaktionskammer im Wesentlichen nicht belasteter Bereich, sodass in diesem Bereich nunmehr der Infrarottemperatursensor angeordnet werden kann, und zwar derart, dass keine Bauteile wie beispielsweise ein Lichtleitrohr oder ein Reflektor-Rohr zwischen Hochdruckfenster und Infrarot-Temperatursensor angeordnet werden müssen. Somit kann der Infrarot-Temperatursensor direkt an dem Hochdruckfenster anliegen oder wenigstens dem Hochdruckfenster (beabstandet) direkt gegenüberliegen, also derart gegenüberliegen, dass zur Messung der Temperatur mittels des Infrarot-Temperatursensors keine zwischengeschalteten Bauteile zwischen Hochdruckfenster und Infrarot-Temperatursensor vorgesehen werden müssen. Aus dem Hochdruckfenster ausgekoppelte Infrarotstrahlung kann somit direkt zum Infrarot-Temperatursensor gelangen. Folglich kann der Infrarot-Temperatursensor näher in Richtung der Reaktionskammer gebracht werden, sodass einerseits eine zuverlässigere Temperaturmessung mittels des Infrarot Temperatursensors erfolgt, und andererseits der Druckbehälter mit dem Infrarot-Temperatursensor kompakter ausgeführt ist.

Vorzugsweise liegt das Hochdruckfenster direkt an der Reaktionskammer an. Somit kann der Infrarot-Temperatursensor noch näher an die Reaktionskammer gebracht werden, sodass sowohl die Temperaturmessung als auch die Kompaktheit des Druckbehälters optimiert sind.

Die Druckbehälterwand, vorzugsweise ein Boden des Druckbehälters, kann eine Bohrung aufweisen, wobei die Bohrung zur Reaktionskammer hin geöffnet ist, und wobei das Hochdruckfenster in der Bohrung vorgesehen ist. Somit kann das Hochdruckfenster einfach in der Druckbehälterwand vorgesehen werden, beispielsweise indem das Hochdruckfenster von innerhalb oder außerhalb des Druckbehälters in die Bohrung eingesetzt wird.

Die Bohrung kann eine Durchgangsbohrung sein, welche nach außerhalb des Druckbehälters führt, sodass das Hochdruckfenster von außerhalb des Druckbehälters in die Bohrung einführbar ist, um sich (ausgehend von der Reaktionskammer) nach außen weg zu erstrecken. Das Hochdruckfenster ist dabei vorzugweise derart in die Bohrung einführbar, dass es sich, sobald es sich in der Bohrung befindet, automatisch in der Druckbehälterwand abstützt. Somit kann das Hochdruckfenster einfach von außerhalb des Druckbehälters in der Druckbehälterwand vorgesehen werden.

Bevorzugt ist, wenn das Hochdruckfenster und/oder der Infrarot-Temperatursensor ausgebildet ist/sind, in die Druckbehälterwand, insbesondere in die Bohrung, eingeschraubt und/oder eingesteckt zu werden. Der Gewindeeingriff kann dabei zur Abstützung des Infrarotfensters in der Druckbehälterwand ausgebildet sein. Folglich kann das Hochdruckfenster bzw. der Infrarot-Temperatursensor einfach in der Bohrung vorgesehen oder ausgewechselt werden.

Der Infrarot-Temperatursensor kann ein Zwischenstück, beispielsweise ein Aufnahmerohr, zur Aufnahme eines Sensorkopfs des Infrarot-Temperatursensors aufweisen. Mittels des Zwischenstück kann insbesondere der Infrarot-Temperatursensors bzw. dessen Sensorkopf einfach in der Bohrung vorgesehen werden. Gemäß einer bevorzugten Ausführung ist das Zwischenstück ausgebildet, in die Bohrung eingeschraubt und/oder eingesteckt zu werden. Das distale Ende des Zwischenstücks kann sich bis zu dem Hochdruckfenster erstrecken oder von dem Hochdruckfenster beabstandet sein.

Die Druckbehälterwand kann einen mikrowellendurchlässigen Bereich zum Einkoppeln von Mikrowellen aufweisen, wobei das Hochdruckfenster und/oder der Infrarot-Temperatursensor neben dem mikrowellendurchlässigen Bereich vorgesehen ist/sind. Somit wird verhindert, dass das Hochdruckfenster und/oder der Infrarot-Temperatursensor den mikrowellendurchlässigen Bereich beeinflussen. Außerdem wird somit die Bauhöhe des Druckbehälters reduziert, da der Infrarot Temperatursensor und/oder das Hochdruckfenster in einen Bereich angeordnet ist/sind, der auf Höhe des mikrowellendurchlässigen Bereichs liegt.

Das Hochdruckfenster und der Infrarot-Temperatursensor können als eine Einheit bzw. integral miteinander ausgebildet sein. Somit können Hochdruckfenster und Infrarot-Temperatursensor einfach, d.h. insbesondere gleichzeitig, in der Druckbehälterwand vorgesehen oder aus dieser entnommen werden.

Vorzugsweise ist das Material des Hochdruckfensters für Infrarotstrahlung in einem Wellenlängenbereich von 2,0 µm bis 2,6 µm durchlässig. Auf diese Weise kann eine zuverlässige Temperaturmessung mittels des Infrarot-Temperatursensors erfolgen.

Das Material des Hochdruckfensters weist vorzugsweise eine kristalline Struktur auf. Die kristalline Struktur eignet sich dabei im besonderen Maße, um hohe Drücke aufzunehmen, sodass die Lebensdauer des Hochdruckfensters erhöht ist und der Infrarot-Temperatursensor gut mittels des Hochdruckfensters vor den hohen Drücken der Reaktionskammer abgeschirmt ist. Besonders bevorzugt weist das Material des Hochdruckfensters Saphir, Quarz, Calciumfluorid und/oder einen PTFE-Werkstoff auf. Diese Materialien eignen sich in besonders vorteilhafter Weise, die Drücke der Reaktionskammer aufzunehmen und somit den Infrarot-Temperatursensor vor diesen Drücken bzw. Kräften abzuschirmen. Außerdem sind diese Materialien hoch mikrowellentransparent, sodass das Hochdruckfenster sich wegen Mikrowellenstrahlung nicht selbsterwärmt. Somit können insbesondere auch Messfehler vermieden werden.

Der Druckbehälter kann ferner eine Kühlzone zum Kühlen des Infrarot-Temperatursensors aufweisen. Somit wird insbesondere verhindert, dass von der Reaktionskammer in Richtung des Infrarot-Temperatursensor abgegebene Wärme nicht den Infrarot-Temperatursensor beeinflusst. Folglich kann dadurch auch eine zuverlässigere Temperaturmessung durch den Infrarot-Temperatursensor erzielt werden.

Die Kühlzone kann eingerichtet sein, den Infrarot-Temperatursensor aktiv und/oder passiv zu kühlen. Bei der aktiven Kühlung können durch externe Energie betriebene Kühlelemente große Mengen an Wärmeenergie effektiv abführen. Die passive Kühlung kann ohne eine externe Energiezufuhr Wärmeenergie abführen, beispielsweise indem Bereiche des Infrarot-Temperatursensor entsprechend konstruktiv ausgestaltet werden, um insbesondere die konvektive Kühlung zu unterstützen. Beispielhafte Ausgestaltungen für eine passive Kühlung sind flächenvergrößernde Bereiche (Kühlrippen etc.) und/oder Bohrungen zum Bewirken entsprechender Strömungen zum Abtransport von Wärme.

In einer bevorzugten Ausführung zur besonders effektiven Kühlung des Infrarot-Temperatursensors weist die Kühlzone bzw. das Mittel zur aktiven Kühlung (aktives Kühlelement) eine Strömungsvorrichtung zur Kühlung des Infrarot-Temperatursensors auf. Besonders von Vorteil ist, wenn die Strömungsvorrichtung ein Ventilator ist. Alternativ oder zusätzlich kann die Kühlzone bzw. das aktive Kühlelement ein Peltier-Element zur Kühlung des Infrarot-Temperatursensors aufweisen.

Die Kühlzone kann ein den Infrarot-Temperatursensor aufnehmendes Rohr aufweisen, wobei das Rohr eine Durchgangsbohrung aufweist, welche derart vorgesehen ist, dass sich durch die Durchgangsbohrung eine Luftströmung einstellt, um den Infrarot-Temperatursensor zu kühlen. Da die Durchgangsbohrung einfach vorgesehen werden kann, kann somit einfach ein passives Kühlelement zur Kühlung des Infrarot-Temperatursensors vorgesehen werden. Besonders bevorzugt ist, wenn das Rohr das Zwischenstück, insbesondere das Aufnahmerohr, ist. Somit kann platzsparend eine effektive Kühlung des Infrarot-Temperatursensors bewirkt werden.

Nachfolgend wird die Erfindung anhand der Figuren, in denen eine bevorzugte Ausführungsform der Erfindung dargestellt ist, beispielhaft beschrieben. In den Figuren zeigen:
- Figur 1: ein Ausführungsbeispiel des erfindungsgemäßen Druckbehälters in einer Schnittansicht, und
- Figur 2: eine Detailansicht eines Ausschnitts des in Figur 1 gezeigten Druckbehälters.

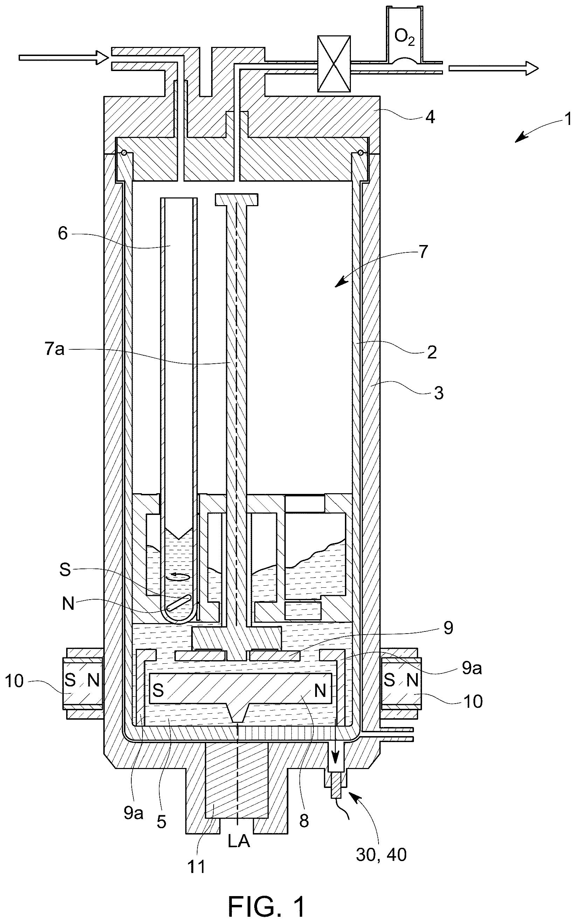

Figur 1 zeigt eine beispielhafte Ausführungsform eines erfindungsgemäßen Druckbehälters 1 mit einer Druckbehälterwand 1a zur Aufnahme von zu beheizenden Proben P zum Auslösen und/oder Fördern chemischer und/oder physikalischer Druckreaktionen an den Proben P. Die Probe P kann beispielsweise Feststoffe wie Sand, Boden, Erde und/oder Blätter aufweisen. Der Druckbehälter 1 ist jedoch nicht auf eine bestimmte Probe P beschränkt. Insbesondere können im Druckbehälter 1 jede Art von Proben einer Druckreaktion und Beheizung unterzogen werden, vor allem Proben mit hoher Viskosität bzw. vielen Feststoffanteilen.

Der Druckbehälter 1 kann ein (Hochdruck-)Autoklav sein. Der Druckbehälter 1 bzw. die Druckbehälterwand 1a besteht vorzugsweise aus einem hochdruckfesten Werkstoff wie beispielsweise Metall, vorzugsweise Stahl, besonders vorzugsweise eine korrosionsbeständige Edelstahl-Legierung. Der Druckbehälter 1 ist dabei vorzugsweise derart ausgebildet, dass er bei Drücken bis zu wenigstens 200 Bar, vorzugsweise bis zu wenigstens 500 Bar, sowie bei Temperaturen von bis zu und auch über 300°C einsetzbar ist.

Der Druckbehälter 1 weist ferner eine Reaktionskammer bzw. einen Druckraum 2 zum Auslösen und/oder Fördern der chemischen und/oder physikalischen Druckreaktionen an den Proben P auf. Erkennbar ist, dass der Druckbehälter 1 die Reaktionskammer 2 umgibt, und zwar vorzugsweise an allen Seiten. Die Probe bzw. Proben P ist zur Probenbehandlung in der Reaktionskammer 2 angeordnet und aus dieser vorzugsweise durch eine Öffnung entnehmbar.

Der Druckbehälter 1 weist vorzugsweise ein (topfförmiges) Unterteil 3 und ein Deckelteil 4 auf, die miteinander verschließbar sind und im geschlossenen Zustand die Reaktionskammer 2 allseitig umgeben. Dabei verschließt der Deckel 4 die in dem Druckbehälter 1, also dem Unterteil 3 des Druckbehälters 1, vorgesehene Öffnung zum Einbringen und Entnehmen der Probe P. Mittels des Deckels 4 kann der Druckbehälter 1 und/oder die Reaktionskammer 2 folglich geöffnet und geschlossen werden.

Wie insbesondere die Figur 1 erkennen lässt, ist die Reaktionskammer 2 ferner ausgebildet, eine Flüssigkeit bzw. Grundlast 5 aufzunehmen. Die Flüssigkeit 5 ist vorzugsweise Wasser, kann aber auch jegliche andere stark mikrowellenabsorbierende Flüssigkeit sein oder aufweisen. Die Flüssigkeit 5 ist dabei insbesondere vorgesehen, um die in dem Druckbehälter 1 bzw. in der Reaktionskammer 2 befindliche Probe P zu beheizen bzw. zu erwärmen. Dies kann beispielsweise erfolgen, indem die Probe P von der Flüssigkeit 5 wenigstens teilweise umgeben ist, und ein nicht näher dargestellter Mikrowellengenerator die Flüssigkeit 5 durch Mikrowellenabsorption erwärmt, sodass die Probe P indirekt über die Flüssigkeit 5 erwärmt wird. Die Probe P kann dabei in einem Probenbehälter 6 wie beispielsweise einem Reagenzglas vorgesehen sein. Vorzugsweise ist der Druckbehälter 1 bzw. die Reaktionskammer 2 ausgebildet zwei oder mehr Proben P aufzunehmen. In entsprechender Weise können auch mehrere Probenbehälter 6 vorgesehen sein, also wenigstens ein Probenbehälter 6, um jeweils eine Probe P aufzunehmen.

Der Druckbehälter 1 kann ferner eine Probenhalterung 7 aufweisen, mit welcher der Probenbehälter 6 in der Reaktionskammer 2 gehalten werden kann. Die Probenhalterung 7 trägt den wenigstens einen Probenbehälter 6 vorzugsweise derart trägt, dass der Probenbehälter 6 sich in der Flüssigkeit 5 befindet. Die Probenhalterung 7 ist insbesondere dazu ausgebildet, um beispielsweise über einen Griff 7a die wenigstens eine Probe P bzw. den wenigstens einen Probebehälter 6 in die Reaktionskammer 2 zu geben und aus dieser wieder zu entnehmen.

Der Druckbehälter 1 kann ferner eine um eine Rotationsachse drehbare, in der Reaktionskammer 2 gelagerte Magnetscheibe 8 aufweisen. Mittels der Magnetscheibe 8, beispielsweise über in der Magnetscheibe 8 vorgesehene Durchgangsbohrungen oder sonstige strömungsmechanische Strukturen wie beispielsweise Rührblätter, kann die Flüssigkeit 5 gerührt werden. Zum Antrieb der Magnetscheibe 8 können Elektromagneten 10 vorgesehen sein, welche um die vorgenannte Rotationsachse bzw. um den Umfang der Reaktionskammer gleichmäßig verteilt sind. Der wenigstens eine Elektromagnet 10 wird angesteuert, damit sich ein (in einem Kreis) rotierendes Magnetfeld bildet, sodass die Magnetscheibe 8 um ihre Rotationsachse rotiert und somit die Flüssigkeit 5 rührt. Die Magnetscheibe 8 ist dabei in entsprechender Weise zu einem Rotor eines Synchron- oder Schrittmotors ausgebildet. Der wenigstens eine Elektromagnet 10 ist vorzugsweise entsprechend einem Stator eines Synchron- oder Schrittmotors ausgebildet. Anstelle der Magnetscheibe 8 kann der Druckbehälter 1 auch jegliches anderes Rührmittel zum Rühren der Flüssigkeit 5 aufweisen, beispielsweise einen Rührstab, welcher auf einer Rührwelle gelagert ist.

Alternativ zu dem Elektromagneten 10 kann der Druckbehälter 1 auch eine andere Magnetanordnung aufweisen, beispielsweise einen drehbar vorgesehenen, vorzugsweise außerhalb des Druckbehälters 1 angeordnete Permanentmagneten, sodass durch die Drehung des Permanentmagneten das sich rotierend Magnetfeld zum rotatorischen Antrieb der Magnetscheibe erzeugt wird. Die obigen Ausführungen bzgl. des Elektromagneten 10 gelten für eine solche Magnetanordnung analog.

Erkennbar ist ferner, dass der Druckbehälter 1 eine Platte oder ein Podest 9 aufweisen kann, welche in der Reaktionskammer 2 vorgesehen und für die Flüssigkeit 5 durchlässig ist, beispielsweise über in der Platte 9 vorgesehene Durchgriffsöffnungen. Die Platte 9 kann dabei mit der Reaktionskammer 2, insbesondere mit dem Boden der Reaktionskammer 2, einen Raum definieren, in welchem die Magnetscheibe 8 gelagert ist. Zur Bildung dieses Raums kann die Platte 9 in der Reaktionskammer 2 eingelegt sein und/oder mit den Seitenwänden der Reaktionskammer 2 verbunden sein (beispielsweise über eine Kante oder einen Vorsprung). Alternativ kann die Platte über sich von der Platte 9 weg erstreckende Seitenwände 9a mit dem Boden der Reaktionskammer 2 verbunden sein. Bevorzugt ist, wenn die Platte 9 aus einem keramischen Material wie beispielsweise Siliciumcarbid (SiC) hergestellt ist. Da diese Materialien stark mikrowellenabsorbierend sind, kann die in der Flüssigkeit 5 vorgesehene Platte 9 mittels Mikrowellenstrahlung erhitzt werden, sodass die Flüssigkeit 5 sich sowohl direkt über die Mikrowellenabsorption als auch indirekt über die Wärmeabgabe der Platte 9 erhitzt.

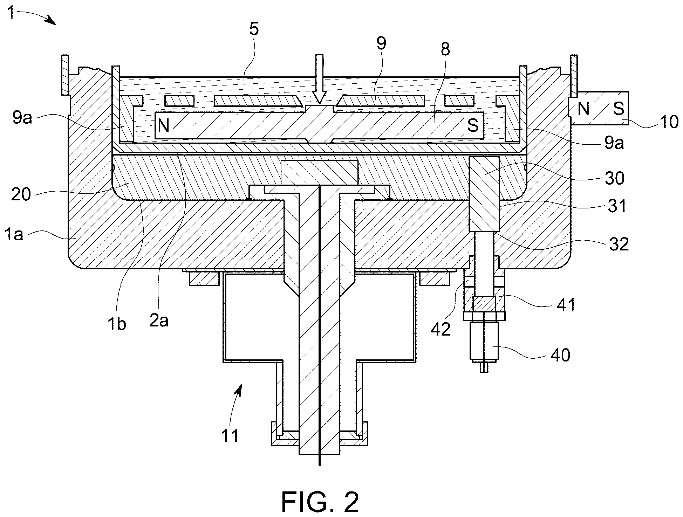

Wie in Figur 2 gut erkennbar, kann zwischen dem (äußeren) Boden 2a der Reaktionskammer 2 und dem (inneren) Boden 1b des Druckbehälters 1 ein Bodenstück 20 vorgesehen sein, auf welchem die Reaktionskammer 2 aufliegt. Vorzugsweise ist der Boden 20 aus einem hochdruckfesten Werkstoff wie beispielsweise PTFE hergestellt. Außerdem kann vorgesehen sein, dass das Bodenstück 20 den Raum zwischen dem Boden 2a der Reaktionskammer 2 und dem Boden 1b des Druckbehälters 1 komplett ausfüllt.

Der Druckbehälter 1 weist ferner einen mikrowellendurchlässigen Bereich 11 auf, über welchen Mikrowellen, beispielsweise mittels einer im mikrowellendurchlässigen Bereich 11 vorgesehenen Antenne, in die Reaktionskammer 2, vorzugsweise über das Bodenstück 20, eingekoppelt werden können. Der mikrowellendurchlässigen Bereich 11 ist vorzugsweise mittig bezüglich des Druckbehälterbodens 1b vorgesehen. Die Erfindung ist dabei jedoch nicht auf die Beheizung mittels Mikrowellen beschränkt. Die Proben P können auch mittels anderer Heizmittel wie beispielsweise mittels eines Heizstrahlers beheizt werden.

Der Druckbehälter 1 weist ferner ein in der Druckbehälterwand 1a vorgesehenes infrarotdurchlässiges Hochdruckfenster 30 auf. Wie insbesondere in Figur 2 erkennbar, erstreckt sich das Hochdruckfenster in einer Richtung (ausgehend) von der Reaktionskammer 2 nach außen bzw. außerhalb des Druckbehälters 1 weg und stützt sich bezüglich eines Drucks in der Reaktionskammer 2 in der Druckbehälterwand 1a ab. Insbesondere kann vorgesehen sein, dass das Hochdruckfenster 30 sich sowohl im Bodenstück 20 als auch in der Druckbehälterwand 1a erstreckt. Vorzugsweise ist das Hochdruckfenster 30 vorgesehen, sich nur in der Druckbehälterwand 1a und/oder im Bodenstück 20 zu erstrecken.

Das Hochdruckfenster 30 kann ferner direkt an der Reaktionskammer 2 bzw. an deren Boden 2a anliegen. Das Bodenstück 20 kann beispielsweise eine Durchgangsbohrung aufweisen, durch welche sich das Hochdruckfenster 30 erstreckt, um direkt an der Reaktionskammer 2 anzuliegen. Alternativ kann jedoch auch vorgesehen sein, dass das Hochdruckfenster 30 - wie in Figur 2 beispielhaft dargestellt - in dem Bodenstück 20 in einer Sacklochbohrung vorgesehen ist, also die Bohrung, in der das Hochdruckfenster 30 vorgesehen ist, das Bodenstück 20 in Richtung der Reaktionskammer 2 nicht vollständig durchdringt.

Das Hochdruckfenster 30 kann sich in der Druckbehälterwand 1a beispielsweise abstützen, indem das Hochdruckfenster 30 in einer in der Druckbehälterwand 1a, vorzugsweise im Boden 1b des Druckbehälters 1, vorgesehenen Bohrung 31 abstützt. Die Bohrung 31 ist dabei zur Reaktionskammer 2 und/oder zum Bodenstück 20 hin geöffnet. Die Abstützung des Hochdruckfenster 30 in der Bohrung 31 kann beispielsweise erfolgen, indem in der Bohrung 31 eine Abstufung 32 vorgesehen ist, auf welcher das Hochdruckfenster 30 aufliegt. Somit kann beispielsweise das Hochdruckfenster 30 von innerhalb des Druckbehälters 1 in die Bohrung 30 gelegt werden, um auf der Abstufung 32 aufzuliegen. Während einer Druckreaktionen in der Reaktionskammer 2 wirkt somit ein Druck auf das Hochdruckfenster 30, wobei die resultierende Kraft von dem Hochdruckfenster 30 auf die Abstufung 32 und somit auf die Druckbehälterwand 1a übertragen wird.

Die Bohrung 31 kann insbesondere als eine Durchgangsbohrung ausgebildet sein, welche nach außerhalb des Druckbehälters 1 führt. Auf diese Weise kann das Hochdruckfenster 30 auch von außerhalb des Druckbehälters 1 in die Bohrung eingeführt werden, sodass sich das Hochdruckfenster 30 ausgehend von der Reaktionskammer 2 nach außerhalb des Druckbehälters 1 weg erstreckt.

Beispielsweise kann somit das Hochdruckfenster 30 in die Druckbehälterwand 1a, insbesondere in die Bohrung 31, von innerhalb oder außerhalb des Druckbehälters 1, eingeschraubt werden. Auf diese Weise kann ein Gewinde des Hochdruckfensters 30, welches in Eingriff mit einem Gewinde der Bohrung 31 steht, ausgebildet sein, als Abstützung für das Hochdruckfensters 30 in der Druckbehälterwand 1a bzw. der Bohrung 31 zu dienen. Die Abstufung 32 kann dabei zusätzlich zur Abstützung vorhanden sein oder auch entfallen.

Das Hochdruckfenster 30 weist vorzugsweise eine zur Bohrung 31 korrespondierende Form auf. Vorzugsweise ist das Hochdruckfenster 31 massiv ausgebildet, also insbesondere ohne Hohlräume. Das Hochdruckfenster 31 kann säulenförmig und/oder klotzförmig ausgebildet sein. Insbesondere kann das Hochdruckfenster 30 jegliche Struktur aufweisen, welche geeignet ist, in die Druckbehälterwand 1a eingesetzt zu werden, sodass es in der Druckbehälterwand 1a, insbesondere in der Bohrung 31, wenigstens in kraft- und/oder formschlüssigen Kontakt gelangt. Vorzugsweise weist das Hochdruckfenster 30 eine Länge auf, die sich von (Innerhalb) der Druckbehälterwand 1a bis zum Bodenstück 20 oder bis nach Innerhalb des Bodenstücks 20 erstreckt.

Vorzugsweise ist das Hochdruckfenster 30 seitlich neben dem mikrowellendurchlässigen Bereich 11 vorgesehen, also insbesondere derart, dass zwischen Hochdruckfenster 30 und mikrowellendurchlässigen Bereich 11 in horizontaler Richtung ein Abstand besteht. Vorzugsweise ist das Hochdruckfenster 30 in der Nähe der inneren Seitenwand des Druckbehälters 1 angeordnet.

Das Material des Hochdruckfensters 30 ist vorzugsweise für Infrarotstrahlung in einem Wellenlängenbereich der Wärmestrahlung von der Probe P bzw. der Flüssigkeit 5, insbesondere in einem Wellenlängenbereich von 2,0 µm bis 2,6 µm, durchlässig. Damit das Hochdruckfenster 30 den hohen Drücken der Reaktionskammer 2 standhält, ist das Hochdruckfenster vorzugsweise ausgelegt, eine der Druckbehälterwand 1a entsprechende Festigkeit zu haben, also insbesondere Drücken von bis zu wenigstens 200 Bar, vorzugsweise bis zu wenigstens 500 Bar, standzuhalten. Um die hohen Drücke der Reaktionskammer 2 besonders gut aufzunehmen, kann das Material des Hochdruckfensters 30 eine kristalline Struktur aufweisen. Es hat sich gezeigt, dass insbesondere Saphir, Quarz, Calciumfluorid und/oder einen PTFE-Werkstoff, insbesondere PTFE-Werkstoffe mit reiner CF₃-(CH₂)ₙ-Struktur (n=mehr als 1.000.000 C-Atome), als Material für das Hochdruckfenster 30 zur Aufnahme hoher Drücke der Reaktionskammer 2 geeignet sind.

Der Druckbehälter 1 weist ferner einen Infrarot-Temperatursensor 40 zur Temperaturmessung bzw. Temperaturkontrolle (beispielsweise für eine Temperaturregelung) auf. Der Infrarot-Temperatursensor 40 ist angeordnet, um von außen direkt an dem Hochdruckfenster 30 anzulegen oder dem Hochdruckfenster 30 wenigstens direkt gegenüberzuliegen, beispielsweise mit einem Abstand zwischen Hochdruckfenster 30 und Infrarot-Temperatursensor 40. Auf diese Weise kann von den beheizten Proben P Infrarotstrahlung durch das Hochdruckfenster 30 hindurch zum Infrarot-Temperatursensor 40 gelangen, um somit die Temperatur der Proben P auf Basis der Infrarotstrahlung direkt zu messen.

Erkennbar ist, dass der Infrarot-Temperatursensor 40 über ein Zwischenstück 41, beispielsweise (wie in Figur 2 erkennbar) in Form eines Aufnahmerohrs, in die Druckbehälterwand 1a, insbesondere in die Bohrung 31, einschraubbar und/oder einsteckbar ist. Das Zwischenstück bzw. das Aufnahmerohr 41 ist dabei ausgebildet, den Sensorkopf des Infrarot-Temperatursensors 40 aufzunehmen, sodass über einen Bereich des Zwischenstücks 41, also beispielswese über den Hohlkörper des Aufnahmerohrs, die Infrarotstrahlung von dem Hochdruckfenster 30 zum Infrarot-Temperatursensor 40 bzw. dessen Sensorkopf gelangen kann. Das distale Ende des Zwischenstücks 41 kann - wie in Figur 2 beispielhaft gezeigt - von dem Hochdruckfenster 30 beabstandet sein. Alternativ kann sich das distale Ende des Zwischenstücks 41 auch bis zu dem Hochdruckfenster 30 erstrecken. Das Zwischenstück 41 ist jedoch nicht zwingend, sodass der Infrarot-Temperatursensor 40 auch direkt in die Bohrung 31 eingeschraubt und/oder eingesteckt werden kann.

Der Druckbehälter 1 kann ferner eine Kühlzone zum Kühlen des Infrarot-Temperatursensors 40 aufweisen. Die Kühlzone ist dabei vorzugsweise neben dem Infrarot-Temperatursensor 40 vorgesehen, sodass ein Wärmefluss von dem Infrarot-Temperatursensor 40 zur Kühlzone bewirkt wird. Bei dem in Figur 2 beispielhaft gezeigten Druckbehälter 1 wird eine Kühlung des Infrarot-Temperatursensors 40 passiv bewirkt, nämlich mittels einer in dem Zwischenstück 41 vorgesehenen Durchgangsbohrung 42. Die Durchgangsbohrung 42 ist dabei jedoch nicht darauf beschränkt, durch das Zwischenstück 41 gebildet zu werden, sodass auch andere Elemente wie beispielsweise ein (zusätzliches) Rohr die Durchgangsbohrung 42 aufweisen kann. Die Durchgangsbohrung 42 erstreckt sich dabei bevorzugt in horizontaler oder (zur Infrarotstrahlung) querer Richtung und/oder zwischen Infrarot-Temperatursensor 40 und Hochdruckfenster 30 bzw. Druckbehälterwand 1a. Die Durchgangsbohrung 41 wird somit eine durch die Durchgangsbohrung 41 verlaufende Strömung bewirken. In dem in Figur 2 gezeigten Beispiel wird somit Wärme von dem Hochdruckfenster 30 in Richtung des Infrarot-Temperatursensors 40 durch das Zwischenstück 41 bzw. Aufnahmerohr strömen und anschließend mittels der Strömung durch die Durchgangsbohrung 42 von dem Infrarot-Temperatursensor 40 weg transportiert werden. Mittels dieser Strömung kann dann also Wärme von dem Infrarot-Temperatursensor 40 weg transportiert werden, um den Infrarot-Temperatursensor 40 zu kühlen.

Alternativ oder zusätzlich zu der Durchgangsbohrung 41 können auch andere aktive und/oder passive Kühlelemente zur Kühlung des Infrarot-Temperatursensors 40 vorgesehen sein. Als passives Kühlelement kommen insbesondere Bauteile in Betracht, die die wärmeabgebende Fläche des Infrarot-Temperatursensors 40 vergrößern, also beispielsweise Kühlrippen. Als aktives Kühlelement kommen insbesondere mit (elektrischer) Energie betriebene Kühlelemente in Betracht, um somit besonders große Mengen an Wärme weg zu transportieren. Beispielsweise kann als aktives Kühlelement eine Strömungsvorrichtung, vorzugsweise ein Ventilator, und/oder ein Peltier-Element zur Anwendung kommen. Das aktive Kühlelement kann mit dem Infrarot-Temperatursensor 40 eine Einheit bilden, um somit eine besonders platzsparende aktive Kühlung zu bewirken. Beispielsweise kann das aktive Kühlelement so vorgesehen sein, dass die durch dieses Kühlelement bewirkte Strömung durch die Durchgangsbohrung 42 führt.

Zudem kann vorgesehen sein, dass der Infrarot-Temperatursensor 40 mit dem Hochdruckfenster 30 integral als Einheit ausgebildet ist. Somit kann beispielsweise vorgesehen sein, dass die Einheit mit einem insbesondere an dem Hochdruckfenster 30 vorgesehenen Gewinde, vorzugsweise auch an dem Infrarot-Temperatursensor 40 vorgesehenen Gewinde, in die Bohrung, 31 einschraubbar ist.

Die Erfindung ist dabei nicht auf die zuvor beschriebenen Merkmale beschränkt. Insbesondere lassen sich alle zuvor beschriebenen Merkmale in beliebiger Weise miteinander kombinieren.

## Patentansprüche

1. Druckbehälter (1) mit einer Druckbehälterwand (1a), welche eine Reaktionskammer (2) als Druckraum zum Auslösen und/oder Fördern chemischer und/oder physikalischer Druckreaktionen einer in der Reaktionskammer (2) aufgenommenen, zu beheizenden Proben (P) vollständig umgibt,
wobei die Druckbehälterwand (1a) ein infrarotdurchlässiges Hochdruckfenster (30) aufweist, welches sich in einer Richtung von der Reaktionskammer (2) nach außen weg erstreckt und sich bzgl. eines Drucks in der Reaktionskammer (2) in der Druckbehälterwand (1a) abstützt,
wobei der Druckbehälter (1) ferner einen Infrarot-Temperatursensor (40) aufweist, welcher dem Hochdruckfenster (30) direkt gegenüberliegt, um die Temperatur einer in der Reaktionskammer (2) aufgenommenen Probe (P) während einer Druckreaktion durch das Hochdruckfenster (30) hindurch zu messen.

2. Druckbehälter (1) nach Anspruch 1, wobei das Hochdruckfenster (30) direkt an der Reaktionskammer (2) anliegt.

3. Druckbehälter (1) nach Anspruch 1 oder 2, wobei die Druckbehälterwand (1a), vorzugsweise ein Boden (1b) des Druckbehälters, eine Bohrung (31) aufweist, wobei die Bohrung (31) zur Reaktionskammer (2) hin geöffnet ist, und wobei das Hochdruckfenster (30) in der Bohrung (31) vorgesehen ist.

4. Druckbehälter (1) nach Anspruch 3, wobei die Bohrung (31) eine Durchgangsbohrung ist, welche nach außerhalb des Druckbehälters (1) führt, sodass das Hochdruckfenster (30) von außerhalb des Druckbehälters (1) in die Bohrung (30) einführbar ist, um sich nach außen weg zu erstrecken.

5. Druckbehälter (1) nach einem der vorhergehenden Ansprüche, wobei das Hochdruckfenster (30) und/oder Infrarot-Temperatursensor (40) ausgebildet ist/sind, in die Druckbehälterwand (1a), insbesondere in die Bohrung (31), eingeschraubt und/oder eingesteckt zu werden.

6. Druckbehälter (1) nach einem der vorhergehenden Ansprüche, wobei der Infrarot-Temperatursensor (40) ein Zwischenstück (41), beispielsweise ein Aufnahmerohr, zur Aufnahme eines Sensorkopfs des Infrarot-Temperatursensors (40) aufweist, wobei das Zwischenstück (41) vorzugsweise ausgebildet ist, in die Bohrung (31), eingeschraubt und/oder eingesteckt zu werden.

7. Druckbehälter (1) nach Anspruch 6, wobei das distale Ende des Zwischenstück (41) sich bis zu dem Hochdruckfenster (30) erstreckt oder von dem Hochdruckfenster (30) beabstandet ist.

8. Druckbehälter (1) nach einem der vorhergehenden Ansprüche, wobei die Druckbehälterwand (1a) einen mikrowellendurchlässigen Bereich (11) zum Einkoppeln von Mikrowellen aufweist, wobei das Hochdruckfenster (30) und/oder der Infrarot-Temperatursensor (40) neben dem mikrowellendurchlässigen Bereich (11) vorgesehen ist/sind.

9. Druckbehälter (1) nach einem der vorhergehenden Ansprüche, wobei Hochdruckfenster (30) und Infrarot-Temperatursensor (40) als Einheit bzw. integral ausgebildet sind.

10. Druckbehälter (1) nach einem der vorhergehenden Ansprüche, wobei das Material des Hochdruckfensters (30) für Infrarotstrahlung in einem Wellenlängenbereich von 2,0 µm bis 2,6 µm durchlässig ist, und/oder wobei das Material des Hochdruckfensters (30) eine kristalline Struktur aufweist, und/oder
wobei das Material des Hochdruckfensters (30) Saphir, Quarz, Calciumfluorid und/oder einen PTFE-Werkstoff aufweist.

11. Druckbehälter (1) nach einem der vorhergehenden Ansprüche, ferner aufweisend eine Kühlzone zum Kühlen des Infrarot-Temperatursensors (40).

12. Druckbehälter (1) nach Anspruch 11, wobei die Kühlzone eingerichtet ist, den Infrarot-Temperatursensor (40) aktiv und/oder passiv zu kühlen.

13. Druckbehälter (1) nach Anspruch 11 oder 12, wobei die Kühlzone eine Strömungsvorrichtung zur Kühlung des Infrarot-Temperatursensors (40) aufweist, wobei die Strömungsvorrichtung vorzugsweise ein Ventilator ist.

14. Druckbehälter (1) nach einem der Ansprüche 11 bis 13, wobei die Kühlzone ein Peltier-Element zur Kühlung des Infrarot-Temperatursensors (40) aufweist.

15. Druckbehälter (1) nach einem der Ansprüche 11 bis 14, wobei die Kühlzone ein den Infrarot-Temperatursensor (40) aufnehmendes Rohr aufweist, wobei das Rohr eine Durchgangsbohrung aufweist, welche derart vorgesehen ist, dass sich durch die Durchgangsbohrung eine Luftströmung einstellt, um den Infrarot-Temperatursensor (40) zu kühlen, wobei das Rohr vorzugsweise das Zwischenstück (41) und besonders bevorzugt das Aufnahmerohr ist.

## Claims

1. Pressure container (1) including a pressure container wall (1a) which completely surrounds a reaction chamber (2) as pressure room for triggering and/or stimulating of chemical and/or physical pressure reactions of a sample (P) to be heated, which is received in the reaction chamber (2),
wherein the pressure chamber wall (1a) comprises an infrared-transmissive high pressure window (30), which extends in a direction from the reaction chamber (2) to the outside, and is supported in the pressure chamber wall relative to a pressure in the reaction chamber (2),
wherein the pressure container (1) comprises an infrared temperature sensor (40) which is directly opposite to the high-pressure window (30) in order to measure the temperature of a sample (P) received in the reaction chamber (2) during a pressure reaction through the high-pressure window (30).

2. Pressure container (1) according to claim 1, wherein the high-pressure window (30) directly abuts the reaction chamber (2).

3. Pressure container (1) according to claim 1 or 2, wherein the pressure container wall (1a), preferably a bottom (1b) of the pressure container, comprises a bore-hole (31), wherein the bore-hole (31) is open to the reaction chamber, and wherein the high-pressure window (30) is provided in the bore-hole (31).

4. Pressure container (1) according to claim 3, wherein the bore-hole (31) is a through-bore which extends to the outside of the pressure container (1), so that the high-pressure window (30) may be introduced into the bore-hole (30) from outside of the pressure container (1) to extend to the outside.

5. Pressure container (1) according to one of the preceding claims, wherein the high-pressure window (30) and/or the infrared temperature sensor (40) is/are configured to be screwed in and/or inserted in the pressure container wall (1a), in particular in the bore-hole (31).

6. Pressure container (1) according to one of the preceding claims, wherein the infrared temperature sensor (40) comprises an intermediate element (41), for example a receiving tube for receiving a sensor head of the infrared temperature sensor (40), wherein the intermediate element (41) is preferably configured to be screwed in and/or inserted in the bore-hole (31).

7. Pressure container (1) according to claim 6, wherein the distal end of the intermediate element (41) extends up to the high-pressure window (30) or is spaced from the high-pressure window (30).

8. Pressure container (1) according to one of the preceding claims, wherein the pressure container wall (1a) comprises a microwave transmissive area (11) for coupling microwaves, wherein the high-pressure window (30) and/or the infrared temperature sensor (40) is/are provided in addition to the microwave-transmissive area (11).

9. Pressure container (1) according to one of the preceding claims, wherein the high-pressure window (30) and the infrared temperature sensor (40) are formed as a unity or formed integrally, respectively.

10. Pressure container (1) according one of the preceding claims, wherein the material of the high-pressure window (30) is transmissive for infrared radiation in a wavelength range of 2.0 µm to 2.6 µm, and/or wherein the material of the high-pressure window (30) comprises a crystalline structure, and/or
wherein the material of the high-pressure window (30) comprises sapphire, quartz, calcium fluoride, and/or a PTFE material.

11. Pressure container (1) according to one of the preceding claims, further comprising a cooling zone for cooling the infrared temperature sensor (40).

12. Pressure container (1) according to claim 11, wherein the cooling zone is configured to actively and/or passively cool the infrared temperature sensor (40).

13. Pressure container (1) according to claim 11 or 12, wherein the cooling zone comprises a flow device for cooling the infrared temperature sensor (40), wherein preferably the flow device is a fan.

14. Pressure container (1) according to one of the claims 11 to 13, wherein the cooling zone comprises a Peltier element for cooling the infrared temperature sensor (40).

15. Pressure container (1) according to one of the claims 11 to 14, wherein the cooling zone comprises a tube which receives the infrared temperature sensor (40), wherein the tube comprises a through-bore, which is provided in a way that the through-bore causes an airflow in order to cool the infrared temperature sensor (40), wherein preferably the tube is the intermediate element (41), and more preferably the receiving tube.

## Revendications

1. Réservoir sous pression (1) avec une paroi de réservoir sous pression (1a), laquelle entoure intégralement une chambre de réaction (2) comme espace sous pression pour déclencher et / ou stimuler des réactions sous pression chimiques et / ou physiques d'une éprouvette (P) à chauffer, logée dans la chambre de réaction (2),
dans lequel la paroi de réservoir sous pression (1a) présente une fenêtre haute pression (30) perméable au rayonnement infrarouge, laquelle s'étend dans un sens à distance vers l'extérieur de la chambre de réaction (2) et s'appuie dans la paroi du réservoir sous pression (1a) par rapport à une pression dans la chambre de réaction (2),
dans lequel le réservoir sous pression (1) présente, en outre, un capteur de température à infrarouge (40), lequel se trouve directement en face de la fenêtre haute pression (30), pour mesurer à travers la fenêtre haute pression (30) la température d'une éprouvette (P) logée dans la chambre de réaction (2) pendant une réaction sous pression.

2. Réservoir sous pression (1) selon la revendication 1, dans lequel la fenêtre haute pression (30) est directement adjacente à la chambre de réaction (2).

3. Réservoir sous pression (1) selon la revendication 1 ou 2, dans lequel la paroi de réservoir sous pression (1a), de préférence un fond (1b) du réservoir sous pression, présente un alésage (31), dans lequel l'alésage (31) est ouvert vers la chambre de réaction (2), et dans lequel la fenêtre haute pression (30) est prévue dans l'alésage (31).

4. Réservoir sous pression (1) selon la revendication 3, dans lequel l'alésage (31) est un alésage traversant, lequel conduit vers l'extérieur du réservoir sous pression (1), de sorte que la fenêtre haute pression (30) peut être introduite de l'extérieur du réservoir sous pression (1) dans l'alésage (30), pour s'étendre à distance vers l'extérieur.

5. Réservoir sous pression (1) selon l'une des revendications précédentes, dans lequel la fenêtre haute pression (30) et / ou le capteur de température à infrarouge (40) est / sont conçu(s) pour être vissé(s) et / ou inséré(s) dans la paroi de réservoir sous pression (1a), plus particulièrement dans l'alésage (31).

6. Réservoir sous pression (1) selon l'une des revendications précédentes, dans lequel le capteur de température à infrarouge (40) présente une pièce intermédiaire (41), par exemple, un tube récepteur, pour loger une tête de capteur du capteur de température à infrarouge (40), dans lequel la pièce intermédiaire (41) est conçue de préférence pour être vissée et / ou insérée dans l'alésage (31).

7. Réservoir sous pression (1) selon la revendication 6, dans lequel l'extrémité distale de la pièce intermédiaire (41) s'étend jusqu'à la fenêtre haute pression (30) ou est espacée de la fenêtre haute pression (30).

8. Réservoir sous pression (1) selon l'une des revendications précédentes, dans lequel la paroi du réservoir sous pression (1a) présente une zone (11) perméable aux micro-ondes pour le couplage de micro-ondes, dans lequel la fenêtre haute pression (30) et / ou le capteur de température à infrarouge (40) est / sont prévu (s) à côté de la zone perméable aux micro-ondes (11).

9. Réservoir sous pression (1) selon l'une des revendications précédentes, dans lequel la fenêtre haute pression (30) et le capteur de température à infrarouge (40) sont conçus comme une unité resp. intégralement.

10. Réservoir sous pression (1) selon l'une des revendications précédentes, dans lequel la matière de la fenêtre haute pression (30) pour le rayonnement infrarouge est transparente dans une gamme de longueurs d'ondes de 2,0 µm à 2,6 µm, et / ou dans lequel la matière de la fenêtre haute pression (30) présente une structure cristalline, et / ou dans lequel la matière de la fenêtre haute pression (30) est du saphir, du quartz, du fluorure de calcium et / ou une matière de PTFE.

11. Réservoir sous pression (1) selon l'une des revendications précédentes, présentant, en outre, une zone de refroidissement pour refroidir le capteur de température à infrarouge (40).

12. Réservoir sous pression (1) selon la revendication 11, dans lequel la zone de refroidissement est ménagée pour refroidir le capteur de température à infrarouge (40) de façon active et / ou passive.

13. Réservoir sous pression (1) selon la revendication 11 ou 12, dans lequel la zone de refroidissement présente un dispositif d'écoulement pour refroidir le capteur de température à infrarouge (40), dans lequel le dispositif d'écoulement est, de préférence, un ventilateur.

14. Réservoir sous pression (1) selon l'une des revendications 11 à 13, dans lequel la zone de refroidissement présente un élément Peltier pour refroidir le capteur de température à infrarouge (40).

15. Réservoir sous pression (1) selon l'une des revendications 11 à 14, dans lequel la zone de refroidissement présente un tube logeant le capteur de température à infrarouge (40), dans lequel le tube présente un alésage traversant, lequel est prévu de manière telle qu'un écoulement d'air s'établit à travers l'alésage traversant, pour refroidir le capteur de température à infrarouge (40), dans lequel le tube est, de préférence, la pièce intermédiaire (41) et, d'une manière particulièrement préférée, le tube récepteur.
